# EUROPEAN PATENT APPLICATION

(11) **EP 4 586 439 A2**
(43) Date of publication of application: **16.07.2025**
(21) Application number: 24218057.8
(22) Date of filing: 06.12.2024
(51) Int. Cl.: H02J 3/38, H02J 11/00

(54) **ON/OFF-GRID SWITCHING APPARATUS AND POWER SUPPLY SYSTEM**

(30) Priority: 15.01.2024 CN 202410060930
(71) Applicant: Huawei Digital Power Technologies Co., Ltd., Shenzhen, Guangdong 518043 (CN)
(72) Inventor: WANG, Hang, Shenzhen 518043 (CN); CHEN, Wei, Shenzhen 518043 (CN)
(74) Representative: Gill Jennings & Every LLP

(57) **Abstract**

This application provides an on/off-grid switching apparatus and a power supply system. The on/off-grid switching apparatus includes two ends, a live wire, a neutral wire, a relay, a contactor, and a controller. One end of the two ends is configured to connect to a power converter and a load, and the other end of the two ends is configured to connect to a power grid. The relay is connected in series to at least one of the live wire and the neutral wire, and the contactor is connected in series to at least one of the live wire and the neutral wire. The on/off-grid switching apparatus is configured to output, to the power grid through the live wire and the neutral wire, an alternating current output by the power converter. The alternating current is obtained by inverting, by the power converter, a direct current output by a photovoltaic string or an energy storage battery. When the power grid is powered off, a voltage of the power grid is less than or equal to a first voltage threshold, and the controller is configured to: first control the relay to be turned off, and control the contactor to be turned off after the relay is turned off. This can improve reliability of turning off a main circuit switch with a load, and improve an electrical life and reliability of the on/off-grid switching apparatus.

## Description

### TECHNICAL FIELD

This application relates to the field of photovoltaic energy storage and power generation technologies, and in particular, to an on/off-grid switching apparatus and a power supply system.

### BACKGROUND

In a photovoltaic energy storage and power generation system, a backup box is usually an apparatus connected between an inverter and a power grid and configured to switch the inverter between an on-grid working mode and an off-grid working mode based on a working status of the power grid. Currently, when detecting that the power grid is powered off, the backup box controls a main loop switch to be turned off. In this case, the inverter is in the off-grid working mode and supplies power to a load. However, when the backup box controls the main loop switch to be turned off, reliability of turning off the main loop switch with the load is low. Consequently, an electrical life and reliability of the backup box are reduced.

### SUMMARY

This application provides an on/off-grid switching apparatus and a power supply system, to improve reliability of turning off a main loop switch with a load, and improve an electrical life and reliability of the on/off-grid switching apparatus.

According to a first aspect, an embodiment of this application provides an on/off-grid switching apparatus. The on/off-grid switching apparatus includes two ends, a live wire, a neutral wire, a relay, a contactor, and a controller. One end of the two ends is configured to connect to a power converter and a load, and the other end of the two ends is configured to connect to a power grid. The relay is connected in series to at least one of the live wire and the neutral wire, and the contactor is connected in series to at least one of the live wire and the neutral wire. The on/off-grid switching apparatus is configured to output, to the power grid through the live wire and the neutral wire, an alternating current output by the power converter. The alternating current is obtained by inverting, by the power converter, a direct current output by a photovoltaic string or an energy storage battery. When the power grid is powered off, a voltage of the power grid is less than or equal to a first voltage threshold, and the controller is configured to: first control the relay to be turned off, and control the contactor to be turned off after the relay is turned off. In this case, the power converter is in an off-grid working mode and supplies power to the load. During implementation of this embodiment of this application, because turning-off time of the relay is short, when the relay is turned off, the power converter is quickly off-grid to supply power to the load after the power grid is powered off, to ensure that the load is not powered off. Further, because an electrical clearance of the contactor is large, when the contactor is turned off after the relay is turned off, it can be ensured that safety compliance of an off-grid voltage of the power converter to a grid port meets a requirement. This improves reliability of turning off a main loop switch like the relay and the contactor with the load, and improves an electrical life and reliability of the on/off-grid switching apparatus.

In a possible implementation, when the relay is connected in series to the live wire and the contactor includes two main contacts, one of the two main contacts is connected in series to the live wire, and the other of the two main contacts is connected in series to the neutral wire. When the voltage of the power grid is less than or equal to the first voltage threshold, and the contactor uses a linkage control manner, the controller is configured to: first control the relay to be turned off, and control the two main contacts to be simultaneously turned off after the relay is turned off. During implementation of this embodiment of this application, the power converter is quickly off-grid to supply power to the load after the power grid is powered off. This improves reliability of turning off the main circuit switch with the load, and improves the electrical life and the reliability of the on/off-grid switching apparatus.

In a possible implementation, when the relay is connected in series to the live wire and the contactor includes two main contacts, one of the two main contacts is connected in series to the live wire, and the other of the two main contacts is connected in series to the neutral wire. When the voltage of the power grid is less than or equal to the first voltage threshold, and the contactor uses a time-based control manner, the controller is configured to: first control the relay to be turned off, and control one main contact to be turned off prior to the other main contact after the relay is turned off, that is, control the other main contact to be turned off after one main contact is turned off. During implementation of this embodiment of this application, the power converter is quickly off-grid to supply power to the load after the power grid is powered off. This improves reliability of turning off the main circuit switch with the load, and improves the electrical life and the reliability of the on/off-grid switching apparatus.

In a possible implementation, when the contactor further includes an auxiliary normally open contact, an on/off status of the auxiliary normally open contact is the same as on/off statuses of the main contacts. In other words, the auxiliary normally open contact is turned on when the main contacts are turned on, and the auxiliary normally open contact is turned off when the main contacts are turned off. After the controller controls the two main contacts to be turned off, if the auxiliary normally open contact is turned on, it indicates that the contactor is faulty. In this case, the controller is further configured to send a shutdown signal to the power converter, so that the power converter is shut down. During implementation of this embodiment of this application, the auxiliary normally open contact may feed back the on/off statuses of the main contacts in the contactor in real time, to implement fault detection of the contactor, and ensure that the power converter is quickly shut down in an off-grid state after detecting that the contactor is faulty. This ensures absolute safety of the on/off-grid switching apparatus in a case of a single point of failure, and improves off-grid safety of the power converter.

In a possible implementation, when the contactor further includes an auxiliary normally closed contact, an on/off status of the auxiliary normally closed contact is opposite to the on/off statuses of the main contacts. In other words, the auxiliary normally closed contact is turned off when the main contacts are turned on, and the auxiliary normally closed contact is turned on when the main contacts are turned off. After the controller controls the two main contacts to be turned off, if the auxiliary normally closed contact is turned off, it indicates that the contactor is faulty. In this case, the controller is further configured to send a shutdown signal to the power converter, so that the power converter is shut down. During implementation of this embodiment of this application, the auxiliary normally closed contact may feed back the on/off statuses of the main contacts in the contactor in real time, to implement fault detection of the contactor, and ensure that the power converter is quickly shut down in the off-grid state after detecting that the contactor is faulty. This ensures absolute safety of the on/off-grid switching apparatus in a case of a single point of failure, and improves off-grid safety of the power converter.

According to a second aspect, an embodiment of this application provides a power supply system. The power supply system includes the on/off-grid switching apparatus provided in any one of the first aspect and the possible implementations of the first aspect and a power converter. The power converter is connected to a power grid via the on/off-grid switching apparatus, and the power converter includes a photovoltaic inverter or a power conversion system. When a contactor includes a main contact and an auxiliary normally closed contact, an on/off status of the auxiliary normally closed contact is opposite to an on/off status of the main contact. When an inverter circuit in the power converter does not output an alternating current and a voltage of the power grid is less than a second voltage threshold, if the auxiliary normally closed contact is turned on, it indicates that the contactor is not faulty. In this case, the controller in the power converter is configured to control the inverter circuit to output an alternating current. If the auxiliary normally closed contact is turned off, it indicates that the contactor is faulty. In this case, the controller in the power converter is configured to control the inverter circuit not to output an alternating current. The second voltage threshold is less than a first voltage threshold. During implementation of this embodiment of this application, before the power converter is started in an off-grid state, the auxiliary normally closed contact may feed back the on/off status of the main contact in the contactor, to implement fault detection of the contactor. A fault detection manner is simple. Further, when the contactor is not faulty, it is ensured that the power converter can be started in the off-grid state to supply power to the load, to improve reliability of startup in the off-grid state of the power converter. In addition, after it is detected that the contactor is faulty, it can be further ensured that the power converter continues to remain in a shutdown state, to ensure absolute safety of the on/off-grid switching apparatus in a case of a single point of failure. This improves safety of startup in the off-grid state of the power converter.

According to a third aspect, an embodiment of this application provides an on/off-grid switching apparatus. The on/off-grid switching apparatus includes two ends, a live wire, a neutral wire, a relay, a contactor, and a controller. One end of the two ends is configured to connect to a power converter and a load, and the other end of the two ends is configured to connect to a power grid. The relay is connected in series to at least one of the live wire and the neutral wire, and the contactor is connected in series to at least one of the live wire and the neutral wire. The on/off-grid switching apparatus is configured to output, to the power grid through the live wire and the neutral wire, an alternating current output by the power converter. The alternating current is obtained by inverting, by the power converter, a direct current output by a photovoltaic string or an energy storage battery. When the power grid normally supplies power, a voltage of the power grid is greater than a first voltage threshold, and the controller is configured to: control the relay to be turned on, and control the contactor to be turned on after the relay is turned on. In this case, the power converter is in an on-grid working mode and supplies power to the power grid and the load, or the power grid supplies power to the power converter and the load. During implementation of this embodiment of this application, the contactor is in a turned-off state when the relay is turned on. Therefore, the relay is turned on with zero current. This improves reliability of turning on the relay with the load, and prolongs a service life of the relay. In addition, the contactor has a stronger arc resistance physical characteristic. Therefore, when the contactor is turned on after the relay is turned on, the contactor may directly bear an inrush current generated by the load at a moment when a circuit is conducted. This improves an electrical life and reliability of the on/off-grid switching apparatus.

In a possible implementation, when the relay is connected in series to the live wire and the contactor includes two main contacts, one of the two main contacts is connected in series to the live wire, and the other of the two main contacts is connected in series to the neutral wire. When the voltage of the power grid is greater than the first voltage threshold, and the contactor uses a linkage control manner, the controller is configured to: first control the relay to be turned on, and control the two main contacts to be simultaneously turned on after the relay is turned on. This embodiment of this application can be implemented to improve reliability of turning on a main circuit switch with the load, and improve the electrical life and the reliability of the on/off-grid switching apparatus.

In a possible implementation, when the relay is connected in series to the live wire and the contactor includes two main contacts, one of the two main contacts is connected in series to the live wire, and the other of the two main contacts is connected in series to the neutral wire. When the voltage of the power grid is greater than the first voltage threshold, and the contactor uses a time-based control manner, the controller is configured to: first control the relay to be turned on, and control one main contact to be turned on prior to the other main contact after the relay is turned on, that is, control the other main contact to be turned on after one main contact is turned on. This embodiment of this application can be implemented to improve reliability of turning on the main circuit switch with the load, and improve the electrical life and the reliability of the on/off-grid switching apparatus.

It should be understood that mutual reference may be made to the implementations and beneficial effect of the foregoing aspects of this application.

### BRIEF DESCRIPTION OF DRAWINGS

FIG. 1 is a diagram of a structure of a power supply system according to an embodiment of this application;
FIG. 2 is a block diagram of a structure of an on/off-grid switching apparatus when a power converter is a single-phase power converter according to an embodiment of this application;
FIG. 3A to FIG. 3C each are a schematic of a circuit of a relay when a power converter is a single-phase power converter according to an embodiment of this application;
FIG. 4A to FIG. 4C each are a schematic of a circuit of a contactor when a power converter is a single-phase power converter according to an embodiment of this application;
FIG. 5 is a schematic of a circuit of an on/off-grid switching apparatus when a power converter is a single-phase power converter according to an embodiment of this application;
FIG. 6 is a schematic of another circuit of an on/off-grid switching apparatus when a power converter is a single-phase power converter according to an embodiment of this application;
FIG. 7A and FIG. 7B are a diagram of switch switching of an on/off-grid switching apparatus when a power converter switches from an off-grid working mode to an on-grid working mode according to an embodiment of this application;
FIG. 8A and FIG. 8B are a diagram of switch switching of an on/off-grid switching apparatus when a power converter switches from an on-grid working mode to an off-grid working mode according to an embodiment of this application;
FIG. 9 is a block diagram of a structure of an on/off-grid switching apparatus when a power converter is a three-phase power converter according to an embodiment of this application;
FIG. 10A to FIG. 10C each are a schematic of a circuit of a relay when a power converter is a three-phase power converter according to an embodiment of this application;
FIG. 11A to FIG. 11C each are a schematic of a circuit of a contactor when a power converter is a three-phase power converter according to an embodiment of this application; and
FIG. 12 is a schematic of a circuit of an on/off-grid switching apparatus when a power converter is a three-phase power converter according to an embodiment of this application.

### DESCRIPTION OF EMBODIMENTS

The following clearly and completely describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The technical solutions of this application are further described below in detail with reference to the accompanying drawings.

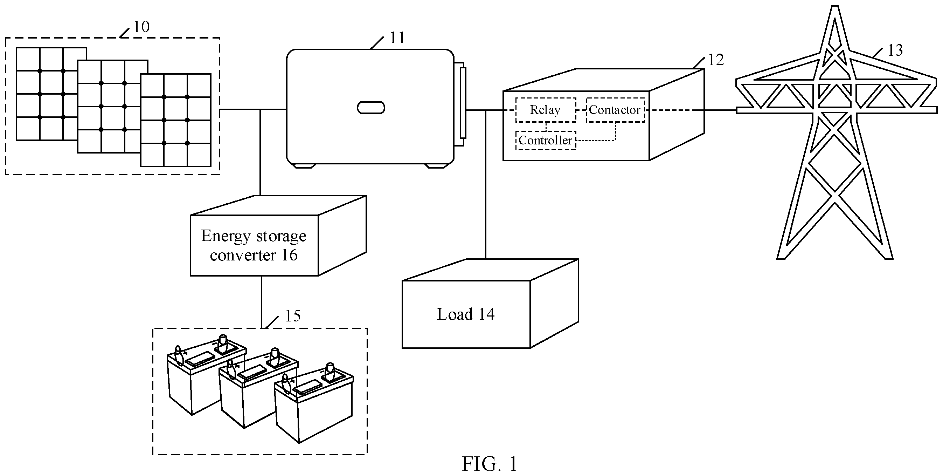

FIG. 1 is a diagram of a structure of a power supply system according to an embodiment of this application. As shown in FIG. 1, the power supply system includes a power converter 11 and an on/off-grid switching apparatus 12. The on/off-grid switching apparatus 12 may also be referred to as a backup box. One end of the power converter 11 is connected to a power grid 13 via the on/off-grid switching apparatus 12, and the one end of the power converter 11 is further configured to connect to a load 14. When the other end of the power converter 11 is configured to connect to a photovoltaic string 10, the power converter 11 is a photovoltaic inverter. When the other end of the power converter 11 is configured to connect to an energy storage battery, the power converter 11 is an energy storage converter. The following uses an example in which the power converter 11 is the photovoltaic inverter for description. Details are not described below again.

The photovoltaic string 10 is configured to absorb solar energy and convert the solar energy into electric energy, to output a direct current to the power converter 11.

The power converter 11 is configured to invert the direct current output by the photovoltaic string 10 into an alternating current. When the power converter 11 is in an on-grid working mode, the power converter 11 outputs the alternating current to the power grid 13 and the load 14. When the power converter 11 is in an off-grid working mode, the power converter 11 outputs the alternating current to the load 14. A process in which the power converter 11 switches between the on-grid working mode and the off-grid working mode may be implemented by the on/off-grid switching apparatus 12. In a specific implementation, the on/off-grid switching apparatus 12 includes a relay, a contactor, and a controller. When the power grid 13 normally supplies power, a voltage of the power grid 13 is greater than a first voltage threshold, and the controller is configured to: control the relay to be turned on, and control the contactor to be turned on after the relay is turned on. In this case, the on/off-grid switching apparatus 12 is configured to output, to the power grid 13 and the load 14 through a live wire and a neutral wire, the alternating current output by the power converter 11. When the power grid 13 is powered off, the voltage of the power grid 13 decreases to be less than or equal to the first voltage threshold, and the controller is further configured to: control the relay to be turned off, and control the contactor to be turned off after the relay is turned off. In this case, the power converter 11 is in the off-grid working mode and outputs the alternating current to the load 14.

This embodiment of this application can be implemented to improve reliability of switching (for example, turning on or turning off) of the relay and the contactor with the load, improve power supply reliability and power supply safety of the power supply system, and have high applicability. In addition, the power converter 11 can seamlessly switch between the on-grid working mode and the off-grid working mode, so that the power converter 11 is quickly off-grid to supply power to the load 14, to ensure that the load 14 is not powered off.

In some feasible implementations, the power supply system may be a photovoltaic energy storage alternating current coupling system or a photovoltaic energy storage direct current coupling system. This is not specifically limited in embodiments of this application. An example in which the power supply system is the photovoltaic energy storage direct current coupling system is used for description. As shown in FIG. 1, the power supply system further includes an energy storage battery 15 and an energy storage converter 16. The energy storage battery 15 is connected to an input end of the power converter 11 via the energy storage converter 16. When there is light, the energy storage converter 16 is configured to charge the energy storage battery 15 based on the direct current output by the photovoltaic string 10. When there is no light (for example, at night or on a cloudy day), the power converter 11 is further configured to: when both the relay and the contactor are turned on, receive an alternating current output by the power grid 13, and output a direct current to the energy storage converter 16 based on the alternating current. Further, the energy storage converter 16 is configured to charge the energy storage battery 15 based on the direct current output by the power converter 11. When there is no light, the energy storage converter 16 is further configured to supply power to the power converter 11 based on a direct current output by the energy storage battery 15, to ensure that the power converter 11 can still normally supply power to the power grid 13 or the load 14 when there is no light, thereby improving power supply efficiency of the power supply system.

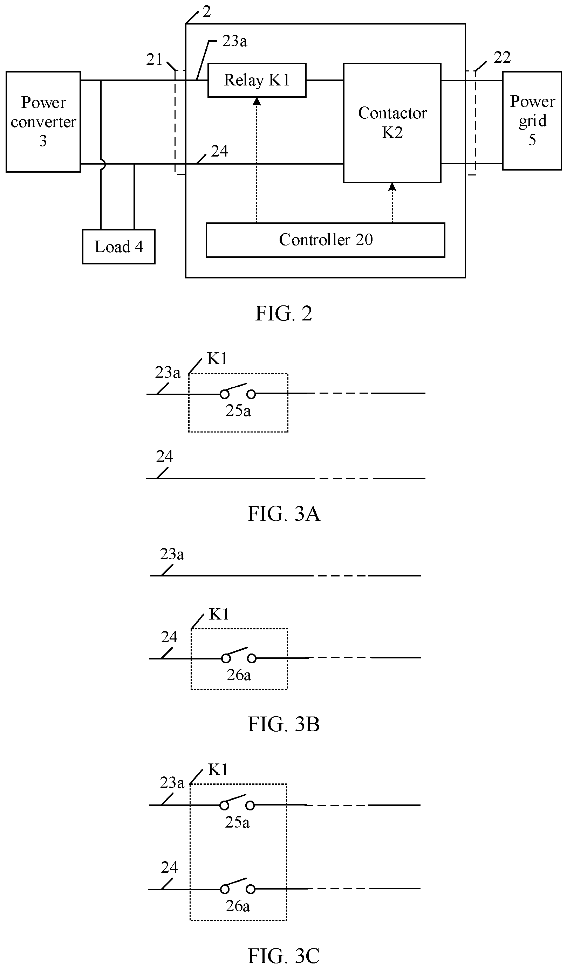

The following describes an example of an on/off-grid switching apparatus provided in this application and an operating principle of the on/off-grid switching apparatus with reference to FIG. 2 to FIG. 12.

FIG. 2 is a block diagram of a structure of an on/off-grid switching apparatus when a power converter is a single-phase power converter according to an embodiment of this application. When a power converter 3 is a single-phase power converter, a quantity of live wires of an on/off-grid switching apparatus 2 is 1. In this case, a structure of the on/off-grid switching apparatus 2 may be shown in FIG. 2. The on/off-grid switching apparatus 2 includes two ends, a live wire 23a, a neutral wire 24, a relay K1, a contactor K2, and a controller 20. The relay K1 and the contactor K2 may be collectively referred to as a main loop switch, and the controller 20 may also be referred to as an on/off-grid controller. One end 21 of the two ends is configured to connect to the power converter 3 and a load 4, and the other end 22 of the two ends is configured to connect to a power grid 5. The relay K1 is connected in series to at least one of the live wire 23a and the neutral wire 24, and the contactor K2 is connected in series to at least one of the live wire 23a and the neutral wire 24. For example, as shown in FIG. 2, the relay K1 is connected in series to the live wire 23a, and the contactor K2 is connected in series to the live wire 23a and the neutral wire 24. Specific serial connection locations of the relay K1 and the contactor K2 are not limited in this embodiment of this application. The on/off-grid switching apparatus 2 is configured to output, to the power grid 5 through the live wire 23a and the neutral wire 24, an alternating current output by the power converter 3. The alternating current is obtained by inverting, by the power converter 3, a direct current output by a photovoltaic string or an energy storage battery.

The on/off-grid switching apparatus 2 is configured to control, based on a voltage of the power grid 5, the main loop switch to be turned on or turned off, so that the power converter 3 switches between an on-grid working mode and an off-grid working mode.

In a specific implementation, when the power grid 5 normally supplies power, the voltage of the power grid 5 is greater than a first voltage threshold, and the controller 20 is configured to: control the relay K1 to be turned on, and control the contactor K2 to be turned on after the relay K1 is turned on. In this case, the power converter 3 is in the on-grid working mode and supplies power to the power grid 5 and the load 4, or the power grid 5 supplies power to the power converter 3 and the load 4. The first voltage threshold is a preset voltage value or a value determined based on a performance parameter of the power grid 5. During implementation of this embodiment of this application, the contactor K2 is in a turned-off state when the relay K1 is turned on. Therefore, the relay K1 is turned on with zero current. This improves reliability of turning on the relay K1 with the load, and prolongs a service life of the relay K1. Further, the contactor K2 has a stronger arc resistance physical characteristic. Therefore, when the contactor K2 is turned on after the relay K1 is turned on, the contactor K2 may directly bear an inrush current generated by the load 4 at a moment when a circuit is conducted. This improves an electrical life and reliability of the on/off-grid switching apparatus 2. For example, the inrush current generated by the load 4 may be 63 A or another current value. This is not specifically limited in this embodiment of this application.

When the power grid 5 is powered off, the voltage of the power grid 5 decreases to be less than or equal to the first voltage threshold, and the controller 20 is further configured to: control the relay K1 to be turned off, and control the contactor K2 to be turned off after the relay K1 is turned off. In this case, the power converter 3 switches from the on-grid working mode to the off-grid working mode and supplies power to the load 4. During implementation of this embodiment of this application, because turning-off time of the relay K1 is short (for example, less than 20 ms), when the relay K1 is turned off, the power converter 3 can seamlessly switch between the on-grid working mode and the off-grid working mode. In this way, the power converter 3 is quickly off-grid to supply power to the load 4 after the power grid 5 is powered off, to ensure that the load 4 is not powered off. Further, because an electrical clearance of the contactor K2 is large (for example, greater than 4 mm), when the contactor K2 is turned off after the relay K1 is turned off, it can be ensured that safety compliance of an off-grid voltage of the power converter 3 to a grid port meets a requirement. This improves reliability of turning off the main loop switch with the load, improves the electrical life and the reliability of the on/off-grid switching apparatus 2, and improves power supply safety.

This embodiment of this application can be implemented to improve reliability of switching (for example, turning on or turning off) of the main loop switch with the load, and improve the electrical life and the reliability of the on/off-grid switching apparatus 2. In addition, the power converter 3 can seamlessly switch between the on-grid working mode and the off-grid working mode, so that the power converter 3 is quickly off-grid to supply power to the load 4 after the power grid 5 is powered off, to ensure that the load 4 is not powered off. In addition, the power converter 3 and the load 4 share a same group of main loop switches, and there is no need to dispose different main loop switches for the power converter 3 and the load 4. Therefore, switch costs are lower, and a circuit structure is simpler.

In some feasible implementations, an electrical clearance of the relay K1 is less than 1 mm or another value, that is, the relay K1 is a small-clearance relay. The electrical clearance is a shortest spatial distance between a movable contact and a static contact inside the relay K1 when the relay K1 is turned off. During implementation of this embodiment of this application, when the electrical clearance of the relay K1 is large, an electric arc generated at a moment when the relay K1 is turned off is uncontrolled and does not burn stably between the dynamic contact and the static contact. As a result, the electric arc flutters out, and a plastic component around the dynamic contact and the static contact is burnt. Therefore, the relay K1 with a small electrical clearance can ensure that the electric arc is controllable and does not spread outside the dynamic contact and the static contact. This improves an electrical life and reliability of turning off the relay K1 with the load, and reduces costs. In addition, safety compliance of the on/off-grid switching apparatus 2 is determined based on only the electrical clearance of the contactor K2, that is, a value of the electrical clearance of the relay K1 does not affect the safety compliance of the on/off-grid switching apparatus 2, so that electric energy stability and safety of the on/off-grid switching apparatus 2 can be improved.

Optionally, in some feasible implementations, the relay K1 may alternatively be a large-clearance relay with a higher current specification. The electrical clearance of the relay K1 is not limited in this embodiment of this application.

In some feasible implementations, the relay K1 may be one of an electromagnetic relay and a magnetic retention relay. A specific type of the relay K1 is not limited in this embodiment of this application.

In some feasible implementations, there may be one or more loads 4. When there are a plurality of loads 4, the plurality of loads 4 include different types of backed-up loads. For example, when the on/off-grid switching apparatus 2 is used in a household power supply system, the backed-up load is an important load in a user's home, to be specific, a power supply priority of the backed-up load is higher than a power supply priority of another load in the user's home. Therefore, it is ensured that when the power grid 5 is powered off or has no power, the power converter 3 can still supply power to the important load, so that the important load is not powered off, thereby improving user experience.

In some feasible implementations, the voltage of the power grid 5 may be collected by an internal or external voltage sampling circuit of the on/off-grid switching apparatus 2. This is not specifically limited in this embodiment of this application.

In some feasible implementations, the on/off-grid switching apparatus 2 is further configured to control, based on the voltage of the power grid 5 and an output voltage of the power converter 3, the main circuit switch to be turned on or turned off, so that the power converter 3 switches between the on-grid working mode and the off-grid working mode. In a specific implementation, when the output voltage of the power converter 3 is greater than or equal to a preset output voltage threshold, the power converter 3 may normally supply power. The on/off-grid switching apparatus 2 is configured to: when the power converter 3 normally supplies power, control, based on the voltage of the power grid 5, the main loop switch to be turned on or turned off. For details, refer to the embodiment corresponding to FIG. 2. Details are not described herein again. The preset output voltage threshold is a preset voltage value, or is a value determined based on an internal component of the power converter 3. The output voltage of the power converter 3 may be collected by an internal or external voltage sampling circuit of the on/off-grid switching apparatus 2. This is not specifically limited in this embodiment of this application.

In some feasible implementations, the relay K1 is connected in series to at least one of the live wire 23a and the neutral wire 24. Details are shown in FIG. 3A to FIG. 3C. When the relay K1 is connected in series to the live wire 23a, as shown in FIG. 3A, the relay K1 includes a main contact 25a, and the main contact 25a is connected in series to the live wire 23a. When the relay K1 is connected in series to the neutral wire 24, as shown in FIG. 3B, the relay K1 includes a main contact 26a, and the main contact 26a is connected in series to the neutral wire 24. When the relay K1 is connected in series to the live wire 23a and the neutral wire 24, as shown in FIG. 3C, the relay K1 includes a main contact 25a and a main contact 26a. The main contact 25a is connected in series to the live wire 23a, and the main contact 26a is connected in series to the neutral wire 24. When the controller 20 controls the relay K1 in a linkage control manner, the main contact 25a and the main contact 26a are simultaneously turned on or turned off. When the controller 20 controls the relay K1 in a time-based control manner, the main contact 26a is turned on or turned off after the main contact 25a is turned on or turned off, that is, the main contact 26a and the main contact 25a are turned on or turned off at different time. It should be understood that the main contact is a contact connected to a main power loop. When all main contacts inside the relay K1 are turned on or turned off, it indicates that the relay K1 is turned on or turned off.

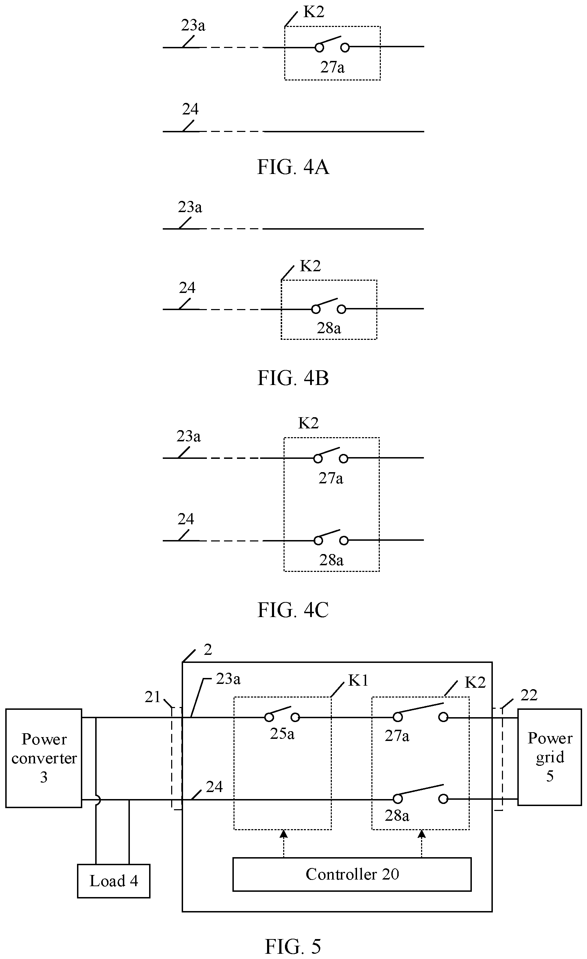

In some feasible implementations, the contactor K2 is connected in series to at least one of the live wire 23a and the neutral wire 24. Details are shown in FIG. 4A to FIG. 4C. When the contactor K2 is connected in series to the live wire 23a, as shown in FIG. 4A, the contactor K2 includes a main contact 27a, and the main contact 27a is connected in series to the live wire 23a. When the contactor K2 is connected in series to the neutral wire 24, as shown in FIG. 4B, the contactor K2 includes a main contact 28a, and the main contact 28a is connected in series to the neutral wire 24. When the contactor K2 is connected in series to the live wire 23a and the neutral wire 24, as shown in FIG. 4C, the contactor K2 includes a main contact 27a and a main contact 28a. The main contact 27a is connected in series to the live wire 23a, and the main contact 28a is connected in series to the neutral wire 24. It should be understood that the main contact is a contact connected to the main power loop, and turning on or turning off of the contactor K2 means that all main contacts inside the contactor K2 are turned on or turned off.

It may be understood that any relay K1 shown in FIG. 3A to FIG. 3C may be combined with any contactor K2 shown in FIG. 4A to FIG. 4C. A combination manner of the relay K1 and the contactor K2 is not limited in this embodiment of this application. For ease of description, the following uses a combination of the relay K1 shown in FIG. 3A and the contactor K2 shown in FIG. 4C as an example for description. A structure of the on/off-grid switching apparatus 2 is specifically shown in FIG. 5.

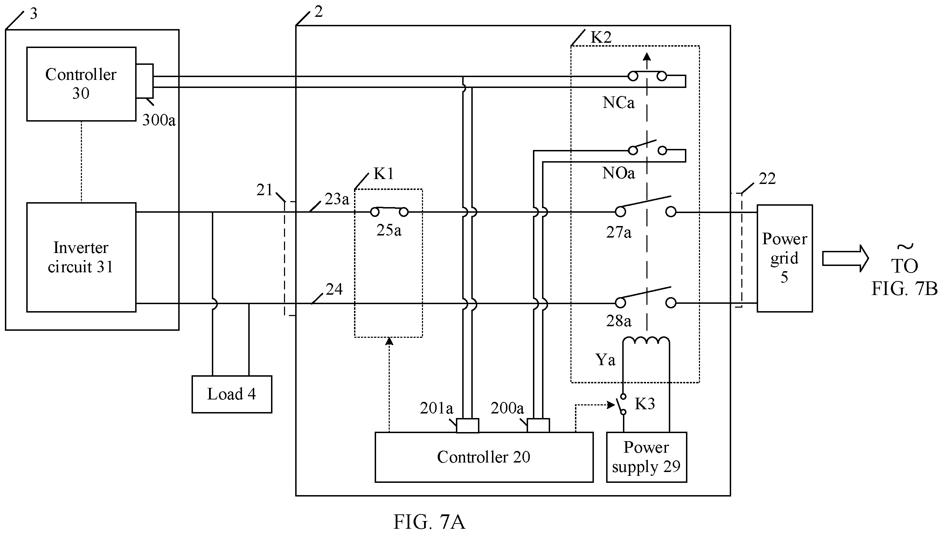

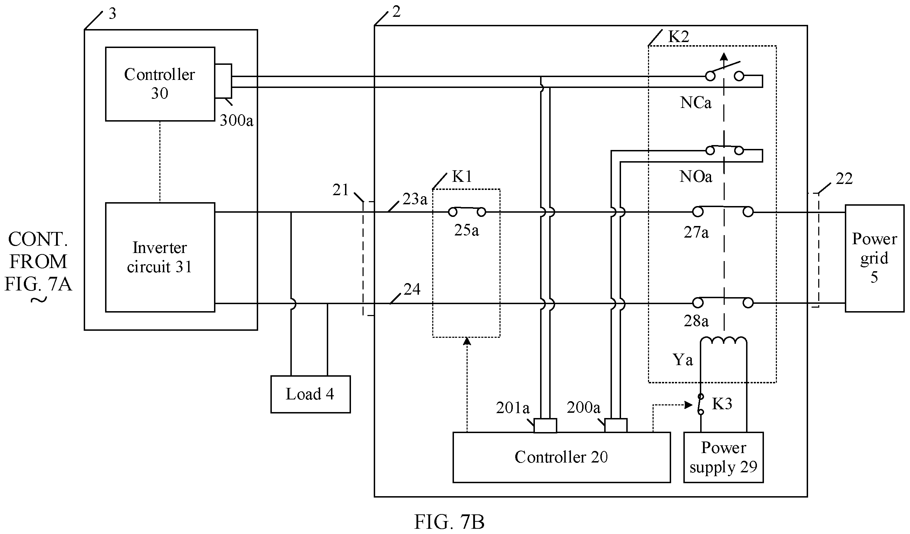

In some feasible implementations, when the voltage of the power grid 5 is greater than the first voltage threshold, and the contactor K2 uses the linkage control mode, the controller 20 is configured to: control the main contact 25a to be turned on, and control the main contact 27a and the main contact 28a to be simultaneously turned on after the main contact 25a is turned on, so that the power converter 3 is in the on-grid working mode. Optionally, when the voltage of the power grid 5 is greater than the first voltage threshold, and the contactor K2 uses the time-based control manner, the controller 20 is configured to: control the main contact 25a to be turned on, and control the main contact 27a to be turned on prior to the main contact 28a after the main contact 25a is turned on, to be specific, the main contact 27a and the main contact 28a are turned on at different time, so that the power converter 3 switches from the off-grid working mode to the on-grid working mode. In a specific implementation, an example in which the contactor K2 uses the linkage control manner is used for description. The contactor K2 further includes a drive coil Ya, and the drive coil Ya is configured to control the main contact 27a and the main contact 28a to be turned on or turned off. When the switch K3 is disposed between the drive coil Ya and a power supply 29, the controller 20 is configured to control the switch K3 to be turned on after the main contact 25a is turned on. In this case, the power supply 29 supplies power to the drive coil Ya, so that the main contact 27a and the main contact 28a are simultaneously turned on. In this way, the power converter 3 switches from the off-grid working mode to the on-grid working mode. A switch switching process of the main contact 25a, the main contact 27a, and the main contact 28a is specifically shown in FIG. 7A and FIG. 7B. This embodiment of this application can be implemented to improve reliability of turning on the main circuit switch with the load, and improve the electrical life and the reliability of the on/off-grid switching apparatus 2. In addition, the linkage control manner or the time-based control manner may be used to control the main contact 27a and the main contact 28a to be turned on, so that the control manner is more flexible.

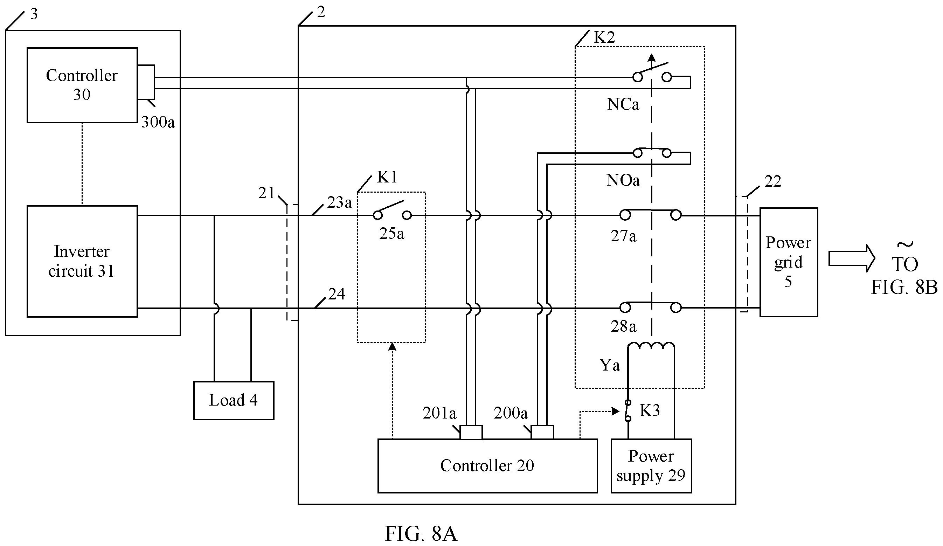

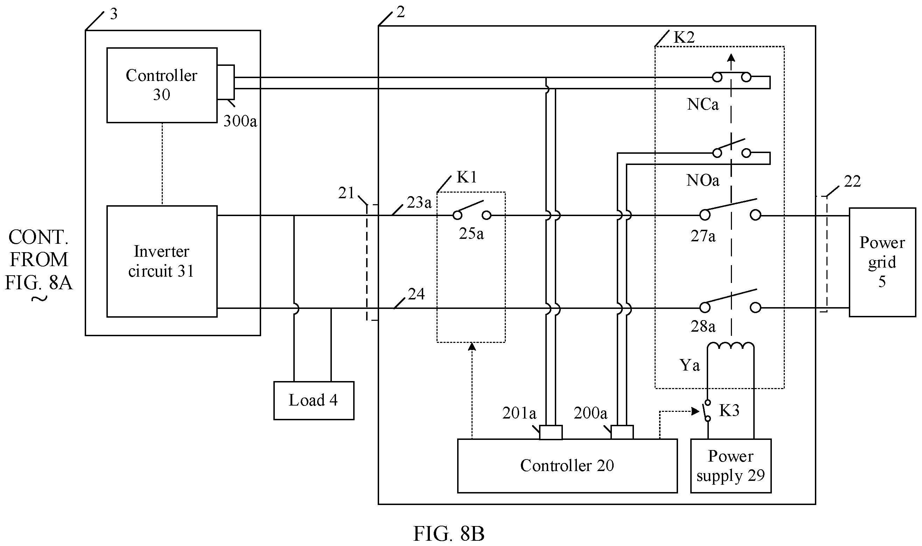

In some feasible implementations, when the voltage of the power grid 5 is less than or equal to the first voltage threshold, the contactor K2 uses the linkage control mode, and the controller 20 is configured to: control the main contact 25a to be turned off, and control the main contact 27a and the main contact 28a to be simultaneously turned off after the main contact 25a is turned off, so that the power converter 3 switches from the on-grid working mode to the off-grid working mode. Optionally, when the voltage of the power grid 5 is less than or equal to the first voltage threshold, the contactor K2 uses the time-based control manner, and the controller 20 is configured to: control the main contact 25a to be turned off, and control the main contact 27a to be turned off prior to the main contact 28a after the main contact 25a is turned off, that is, the main contact 27a and the main contact 28a are turned off at different time, so that the power converter 3 switches from the on-grid working mode to the off-grid working mode. In a specific implementation, an example in which the contactor K2 uses the linkage control manner is used for description. The controller 20 is configured to control the switch K3 to be turned off after the main contact 25a is turned off. In this case, the power supply 29 stops supplying power to the drive coil Ya, so that the main contact 27a and the main contact 28a are simultaneously turned off. In this way, the power converter 3 switches from the on-grid working mode to the off-grid working mode. A switch switching process of the main contact 25a, the main contact 27a, and the main contact 28a is specifically shown in FIG. 8A and FIG. 8B. This embodiment of this application can be implemented to improve reliability of turning off the main circuit switch with the load, and improve the electrical life and the reliability of the on/off-grid switching apparatus 2. In addition, the linkage control manner or the time-based control manner may be used to control the main contact 27a and the main contact 28a to be turned off, so that the control manner is more flexible.

In some feasible implementations, the switch K3 may be one of a metal-oxide-semiconductor field-effect transistor (MOSFET), an insulated gate bipolar transistor (IGBT), a bipolar junction transistor (BJT), and a metal oxide semiconductor (MOS). The switch K3 may be made of a silicon semiconductor material Si, silicon carbide SiC of a third-generation wide-bandgap semiconductor material, gallium nitride GaN, diamond, zinc oxide ZnO, or another material. The foregoing descriptions are merely examples. A specific type and a switch material of the switch K3 are not limited in this embodiment of this application.

In some feasible implementations, the power supply 29 may alternatively be disposed outside the on/off-grid switching apparatus 2. A specific location of the power supply 29 is not limited in this embodiment of this application.

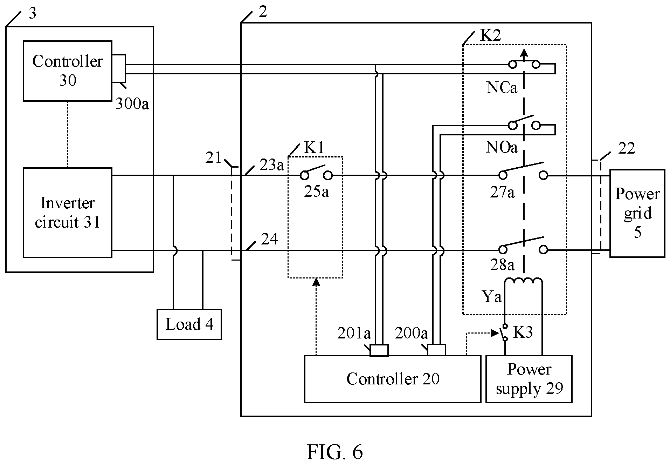

In some feasible implementations, as shown in FIG. 6, the contactor K2 shown in FIG. 5 further includes an auxiliary normally open contact NOa and an auxiliary normally closed contact NCa. An on/off status of the auxiliary normally open contact NOa is the same as on/off statuses of the main contacts, and an on/off status of the auxiliary normally closed contact NCa is opposite to the on/off statuses of the main contacts. In other words, when the main contact 27a and the main contact 28a are turned on, the auxiliary normally open contact NOa is turned on and the auxiliary normally closed contact NCa is turned off. When the main contact 27a and the main contact 28a are turned off, the auxiliary normally open contact NOa is turned off and the auxiliary normally closed contact NCa is turned on. In a specific implementation, the auxiliary normally open contact NOa, the auxiliary normally closed contact NCa, the main contact 27a, and the main contact 28a are mechanically connected via a connecting rod. Optionally, the controller 20 may alternatively directly control the main contact 27a, the main contact 28a, the auxiliary normally open contact NOa, and the auxiliary normally closed contact NCa to operate simultaneously, to ensure that the on/off status of the auxiliary normally open contact NOa is the same as the on/off statuses of the main contacts, and the on/off status of the auxiliary normally closed contact NCa is opposite to the on/off statuses of the main contacts. This is not specifically limited herein. It can be learned that the on/off statuses of the auxiliary normally open contact NOa and the auxiliary normally closed contact NCa may indirectly reflect the on/off statuses of the main contacts in the contactor K2, to be specific, indirectly reflect the on/off statuses of the main contact 27a and the main contact 28a. For example, when an inverter circuit 31 in the power converter 3 does not output an alternating current and the voltage of the power grid 5 is less than a second voltage threshold, the auxiliary normally closed contact NCa is configured to feed back the on/off statuses of the main contact 27a and the main contact 28a to a controller 30 in the power converter 3. When the power converter 3 is in the on-grid working mode or the off-grid working mode, the auxiliary normally open contact NOa or the auxiliary normally closed contact NCa is configured to feed back the on/off statuses of the main contact 27a and the main contact 28a to the controller 20. The on/off status in this embodiment of this application includes a turned-on state and a turned-off state.

In some feasible implementations, the auxiliary normally open contact NOa and the auxiliary normally closed contact NCa may alternatively be disposed inside the relay K1. Optionally, one of the auxiliary normally open contact NOa and the auxiliary normally closed contact NCa is disposed inside the relay K1, and the other auxiliary contact is disposed inside the contactor K2. Specific locations of the auxiliary contacts are not limited in this embodiment of this application.

In some feasible implementations, when the inverter circuit 31 does not output the alternating current and the voltage of the power grid 5 is less than the second voltage threshold, if the auxiliary normally closed contact NCa is turned on, it indicates that the contactor K2 is not faulty. In this case, the controller 30 is configured to control the inverter circuit 31 to output the alternating current. If the auxiliary normally closed contact NCa is turned off, it indicates that the contactor K2 is faulty. In this case, the controller 30 is configured to control the inverter circuit 31 not to output the alternating current. The second voltage threshold is less than the first voltage threshold, and the second voltage threshold is a preset voltage value or a value determined based on the performance parameter of the power grid 5. For example, the second voltage threshold is close to 0.

In a specific implementation, when two ends of the auxiliary normally closed contact NCa are configured to connect to a signal port 300a of the controller 30, the auxiliary normally closed contact NCa is configured to output a first level signal to the signal port 300a when the auxiliary normally closed contact NCa is turned on. In this case, the controller 30 is configured to control, in response to the first level signal, the inverter circuit 31 to output the alternating current. The first level signal indicates that both the main contact 27a and the main contact 28a are in the turned-off state, and may indicate that the contactor K2 is not faulty. In this case, the inverter circuit 31 switches from a shutdown state to a startup state, so that reliability and safety of startup in an off-grid state of the power converter 3 can be ensured. The auxiliary normally closed contact NCa is further configured to output a second level signal to the signal port 300a when the auxiliary normally closed contact NCa is turned off. In this case, the controller 30 is configured to: in response to the second level signal, control the inverter circuit 31 not to output the alternating current. The second level signal indicates that both the main contact 27a and the main contact 28a are in the turned-on state, and may indicate that the contactor K2 is faulty and is in a short-circuit state. For example, a movable contact and a static contact in each of the main contact 27a and the main contact 28a are bonded due to a fault. After the movable contact and the static contact in the main contact are bonded due to a fault, the inverter circuit 31 continues to remain in the shutdown state, so that it can be ensured that safety compliance of the off-grid voltage output by the power converter 3 to the power grid port in the case of a single point of failure meets a requirement (for example, a safety compliance requirement 62109). In this way, absolute safety of the on/off-grid switching apparatus 2 in the case of a single point of failure is ensured. The second level signal is a low level signal when the first level signal is a high level signal, or the second level signal is a high level signal when the first level signal is a low level signal. This is not specifically limited herein.

During implementation of this embodiment of this application, before the power converter 3 is started in the off-grid state, the auxiliary normally closed contact NCa may feed back the on/off statuses of the main contacts in the contactor K2, to implement fault detection of the contactor K2. A fault detection manner is simple. Further, when it is detected that the contactor K2 is not faulty, it is ensured that the power converter 3 is quickly started in the off-grid state to supply power to the load 4, to improve reliability of startup in the off-grid state of the power converter 3. In addition, after the contactor K2 is faulty, it can be further ensured that the power converter 3 continues to remain in the shutdown state, to ensure absolute safety of the on/off-grid switching apparatus 2 in a case of a single point of failure. This improves safety of startup in the off-grid state of the power converter 3.

In some feasible implementations, after the controller 20 controls the main contact 27a and the main contact 28a to be turned on, that is, after the power converter 3 switches from the off-grid working mode to the on-grid working mode, if the auxiliary normally open contact NOa is turned off, it indicates that the contactor K2 is faulty. In this case, the controller 20 is configured to: control the main contact 25a to be turned off, and control the main contact 27a and the main contact 28a to be turned off at the same time or at different time after the main contact 25a is turned off. If the auxiliary normally open contact NOa is turned on, it indicates that the contactor K2 is not faulty. In this case, the controller 20 is configured to control all the main contact 25a, the main contact 27a, and the main contact 28a to remain in a turned-on state.

In a specific implementation, when two ends of the auxiliary normally open contact NOa are connected to a signal port 200a of the controller 20, the auxiliary normally open contact NOa is configured to output a first level signal to the signal port 200a when the auxiliary normally open contact NOa is turned off. The first level signal indicates that both the main contact 27a and the main contact 28a are in a turned-off state, and may indicate that the contactor K2 is faulty. Further, the controller 20 is configured to: in response to the first level signal, control the main contact 25a to be turned off, and control the main contact 27a and the main contact 28a to be turned off at the same time or at different time after the main contact 25a is turned off. The auxiliary normally open contact NOa is further configured to output a second level signal to the signal port 200a when the auxiliary normally open contact NOa is turned on. The second level signal indicates that both the main contact 27a and the main contact 28a are in a turned-on state, and may indicate that the contactor K2 is not faulty. Further, the controller 20 is configured to control, in response to the second level signal, all the main contact 25a, the main contact 27a, and the main contact 28a to remain in the turned-on state, that is, the power converter 3 continues to be on-grid. The second level signal is a low level signal when the first level signal is a high level signal, or the second level signal is a high level signal when the first level signal is a low level signal. This is not specifically limited herein.

During implementation of this embodiment of this application, the auxiliary normally open contact NOa feeds back the on/off statuses of the main contacts in real time, to implement fault detection of the contactor K2, and quickly controls the relay K1 and the contactor K2 to be turned off after detecting that the contactor K2 is faulty. This improves on-grid safety of the power converter 3. In addition, when the contactor K2 is not faulty, it can be further ensured that the power converter 3 continues to be on-grid, to improve on-grid reliability of the power converter 3.

Optionally, in some feasible implementations, after the controller 20 controls the main contact 27a and the main contact 28a to be turned on, that is, after the power converter 3 switches from the off-grid working mode to the on-grid working mode, if the auxiliary normally closed contact NCa is turned on, the contactor K2 is faulty. In this case, the controller 20 is configured to: control the main contact 25a to be turned off, and control the main contact 27a and the main contact 28a to be turned off at the same time or at different time after the main contact 25a is turned off. If the auxiliary normally closed contact NCa is turned off, it indicates that the contactor K2 is not faulty. In this case, the controller 20 is configured to control all the main contact 25a, the main contact 27a, and the main contact 28a to remain in the turned-on state.

In a specific implementation, when the two ends of the auxiliary normally closed contact NCa are connected to a signal port 201a of the controller 20, the auxiliary normally closed contact NCa is configured to output a first level signal to the signal port 201a when the auxiliary normally closed contact NCa is turned on. The first level signal indicates that both the main contact 27a and the main contact 28a are in the turned-off state, and may indicate that the contactor K2 is faulty. Further, the controller 20 is configured to: in response to the first level signal, control the main contact 25a to be turned off, and control the main contact 27a and the main contact 28a to be turned off at the same time or at different time after the main contact 25a is turned off. The auxiliary normally closed contact NCa is further configured to output a second level signal to the signal port 201a when the auxiliary normally closed contact NCa is turned off. The second level signal indicates that both the main contact 27a and the main contact 28a are in the turned-on state, and may indicate that the contactor K2 is not faulty. Further, the controller 20 is configured to control, in response to the second level signal, all the main contact 25a, the main contact 27a, and the main contact 28a to remain in the turned-on state, that is, the power converter 3 continues to be on-grid. The second level signal is a low level signal when the first level signal is a high level signal, or the second level signal is a high level signal when the first level signal is a low level signal. This is not specifically limited herein.

During implementation of this embodiment of this application, the auxiliary normally closed contact NCa feeds back the on/off statuses of the main contacts in real time, to implement fault detection of the contactor K2, and quickly control the relay K1 and the contactor K2 to be turned off after detecting that the contactor K2 is faulty. This improves on-grid safety of the power converter 3. In addition, when the contactor K2 is not faulty, it can be further ensured that the power converter 3 continues to be on-grid, to improve on-grid reliability of the power converter 3.

In some feasible implementations, the controller 20 is configured to output alarm information to a user interface after the contactor K2 is faulty. The controller 20 is further configured to: after the contactor K2 is faulty, output the alarm information to the controller 30, and output a shutdown signal to the controller 30, so that the controller 30 responds to the shutdown signal and controls the inverter circuit 31 to stop outputting the alternating current. The alarm information indicates an operation and maintenance personnel of the on/off-grid switching apparatus 2 to repair the contactor K2. During implementation of this embodiment of this application, the power converter 3 can be controlled to be quickly shut down after on-grid fails, to ensure absolute safety of the on/off-grid switching apparatus 2 in a case of a single point of failure, thereby improving on-grid safety of the power converter 3.

In some feasible implementations, after the controller 20 controls the main contact 27a and the main contact 28a to be turned off, that is, after the power converter 3 switches from the on-grid working mode to the off-grid working mode, if the auxiliary normally open contact NOa is turned on, it indicates that the contactor K2 is faulty. In this case, the controller 20 is further configured to send the shutdown signal to the power converter 3, so that the power converter 3 is shut down and stops outputting the alternating current. If the auxiliary normally open contact NOa is turned off, it indicates that the contactor K2 is not faulty. In this case, the controller 20 is further configured to control all the main contact 25a, the main contact 27a, and the main contact 28a to remain in a turned-off state, so that the power converter 3 continues to be off-grid.

In a specific implementation, the auxiliary normally open contact NOa is configured to output the first level signal to the signal port 200a when the auxiliary normally open contact NOa is turned on. The first level signal indicates that both the main contact 27a and the main contact 28a are in the turned-on state, and may indicate that the contactor K2 is faulty. Further, the controller 20 is configured to output the shutdown signal to the power converter 3 in response to the first level signal, so that the power converter 3 responds to the shutdown signal and is shut down. The auxiliary normally open contact NOa is further configured to output the second level signal to the signal port 200a when the auxiliary normally open contact NOa is turned off. The second level signal indicates that both the main contact 27a and the main contact 28a are in the turned-off state, and may indicate that the contactor K2 is not faulty. Further, the controller 20 is configured to control, in response to the second level signal, all the main contact 25a, the main contact 27a, and the main contact 28a to remain in the turned-off state, so that the power converter 3 continues to be off-grid to output the alternating current to the load 4. The second level signal is a low level signal when the first level signal is a high level signal, or the second level signal is a high level signal when the first level signal is a low level signal. This is not specifically limited herein.

During implementation of this embodiment of this application, the auxiliary normally open contact NOa may feed back the on/off statuses of the main contacts in the contactor K2 in real time, to implement fault detection of the contactor K2, and ensure that the power converter 3 is quickly shut down in an off-grid state after detecting that the contactor K2 is faulty. This ensures absolute safety of the on/off-grid switching apparatus 2 in the case of a single point of failure, and improves off-grid safety of the power converter 3. The single point of failure (single point of failure, SPOF) refers to a case in which the entire on/off-grid switching apparatus 2 cannot operate when the contactor K2 is faulty. In other words, the single point of failure causes the entire on/off-grid switching apparatus 2 to be faulty and cannot operate. In addition, when the contactor K2 is not faulty, it can be further ensured that the power converter 3 continues to be off-grid to supply power to the load, to improve off-grid reliability of the power converter 3.

Optionally, in some possible implementations, after the controller 20 controls the main contact 27a and the main contact 28a to be turned off, that is, after the power converter 3 switches from the on-grid working mode to the off-grid working mode, if the auxiliary normally closed contact NCa is turned off, it indicates that the contactor K2 is faulty. In this case, the controller is further configured to send the shutdown signal to the power converter 3, so that the power converter 3 is shut down. If the auxiliary normally closed contact NCa is turned on, it indicates that the contactor K2 is not faulty. In this case, the controller 20 is further configured to control all the main contact 25a, the main contact 27a, and the main contact 28a to remain in the turned-off state, so that the power converter 3 continues to be off-grid.

In a specific implementation, the auxiliary normally closed contact NCa is configured to output the first level signal to the signal port 201a when the auxiliary normally closed contact NCa is turned off. The first level signal indicates that both the main contact 27a and the main contact 28a are in the turned-on state, and may indicate that the contactor K2 is faulty. Further, the controller 20 is configured to output the shutdown signal to the power converter 3 in response to the first level signal, so that the power converter 3 responds to the shutdown signal and is shut down. The auxiliary normally closed contact NCa is further configured to output the second level signal to the signal port 201a when the auxiliary normally closed contact NCa is turned on. The second level signal indicates that both the main contact 27a and the main contact 28a are in the turned-off state, and may indicate that the contactor K2 is not faulty. Further, the controller 20 is configured to control, in response to the second level signal, all the main contact 25a, the main contact 27a, and the main contact 28a to remain in the turned-off state, so that the power converter 3 continues to be off-grid to output the alternating current to the load 4. The second level signal is a low level signal when the first level signal is a high level signal, or the second level signal is a high level signal when the first level signal is a low level signal. This is not specifically limited herein.

During implementation of this embodiment of this application, the auxiliary normally closed contact NCa may feed back the on/off statuses of the main contacts in the contactor K2 in real time, to implement fault detection of the contactor K2, and ensure that the power converter 3 is quickly shut down in the off-grid state after detecting that the contactor K2 is faulty. This ensures absolute safety of the on/off-grid switching apparatus 2 in a case of a single point of failure, and improves off-grid safety of the power converter 3. In addition, when the contactor K2 is not faulty, it can be further ensured that the power converter 3 continues to be off-grid to supply power to the load, to improve off-grid reliability of the power converter 3.

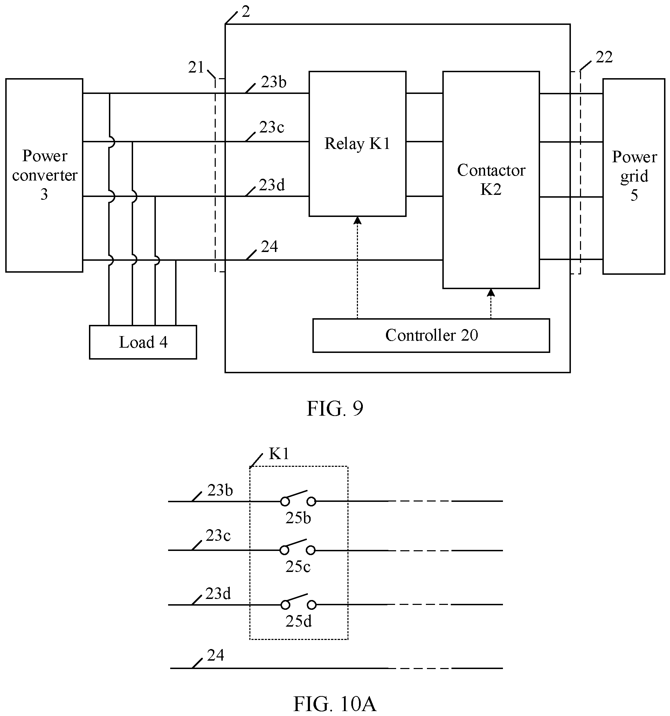

In some feasible implementations, when the power converter 3 is a three-phase power converter, the quantity of live wires of the on/off-grid switching apparatus 2 is 3. In this case, a structure of the on/off-grid switching apparatus 2 may be shown in FIG. 9. The on/off-grid switching apparatus 2 includes two ends, a phase-A live wire 23b, a phase-B live wire 23c, a phase-C live wire 23d, a neutral wire 24, a relay K1, a contactor K2, and a controller 20. One end 21 of the two ends is configured to connect to the power converter 3 and a load 4, and the other end 22 of the two ends is configured to connect to a power grid 5. The load 4 is a three-phase load, and the power grid 5 is a three-phase power grid. The relay K1 is connected in series to at least one of the live wires and the neutral wire 24, and the contactor K2 is connected in series to at least one of the live wires and the neutral wire 24. For example, as shown in FIG. 9, the relay K1 is connected in series to the phase-A live wire 23b, the phase-B live wire 23c, and the phase-C live wire 23d, and the contactor K2 is connected in series to the phase-A live wire 23b, the phase-B live wire 23c, the phase-C live wire 23d, and the neutral wire 24. Specific serial connection locations of the relay K1 and the contactor K2 are not limited in this embodiment of this application. The on/off-grid switching apparatus 2 is configured to output, to the power grid 5 through the phase-A live wire 23b, the phase-B live wire 23c, the phase-C live wire 23d, and the neutral wire 24, an alternating current output by the power converter 3. The alternating current is obtained by inverting, by the power converter 3, a direct current output by a photovoltaic string or an energy storage battery.

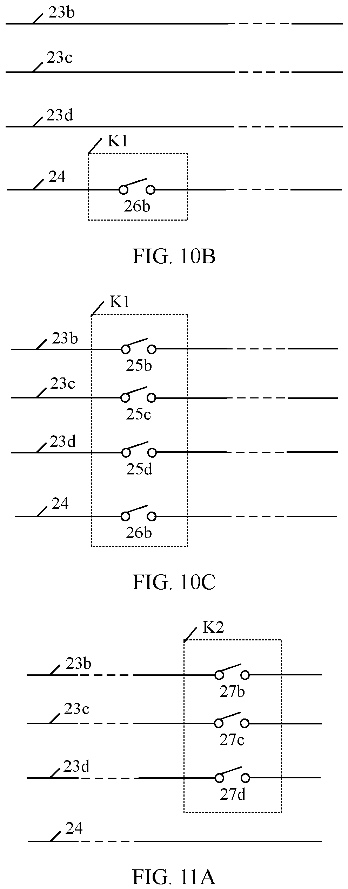

In some feasible implementations, the relay K1 is connected in series to at least one of the live wires and the neutral wire 24. Details are shown in FIG. 10A to FIG. 10C. When the relay K1 is connected in series to the live wires, as shown in FIG. 10A, the relay K1 includes a main contact 25b, a main contact 25c, and a main contact 25d. The main contact 25b is connected in series to the phase-A live wire 23b, the main contact 25c is connected in series to the phase-B live wire 23c, and the main contact 25d is connected in series to the phase-C live wire 23d. When the relay K1 is connected in series to the neutral wire 24, as shown in FIG. 10B, the relay K1 includes a main contact 26b, and the main contact 26b is connected in series to the neutral wire 24. When the relay K1 is connected in series to the live wires and the neutral wire 24, as shown in FIG. 10C, the relay K1 includes a main contact 25b, a main contact 25c, a main contact 25d, and a main contact 26b. The main contact 25b is connected in series to the phase-A live wire 23b, the main contact 25c is connected in series to the phase-B live wire 23c, the main contact 25d is connected in series to the phase-C live wire 23d, and the main contact 26b is connected in series to the neutral wire 24. When the controller 20 controls the relay K1 in a linkage control manner, the main contact 25b, the main contact 25c, the main contact 25d, and the main contact 26b are simultaneously turned on or simultaneously turned off. When the controller 20 controls the relay K1 in a time-based control manner, the main contact 26b is turned on or turned off after the main contact 25b to the main contact 25d are turned on or turned off, that is, the main contact 26b and the main contact 25b to the main contact 25d are turned on or turned off at different time. It should be understood that, when all the main contacts inside the relay K1 are turned on or turned off, it indicates that the relay K1 is turned on or turned off.

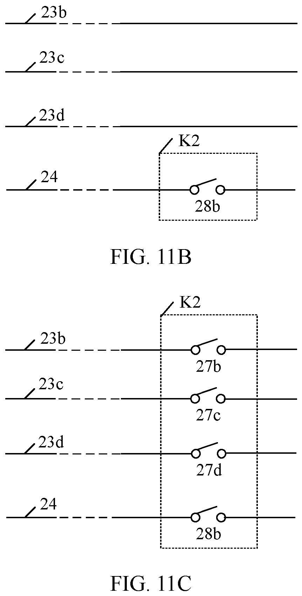

In some feasible implementations, the contactor K2 is connected in series to at least one of the live wires and the neutral wire 24. Details are shown in FIG. 11A to FIG. 11C. When the contactor K2 is connected in series to the live wires, as shown in FIG. 11A, the contactor K2 includes a main contact 27b, a main contact 27c, and a main contact 27d. The main contact 27b is connected in series to the phase-A live wire 23b, the main contact 27c is connected in series to the phase-B live wire 23c, and the main contact 27d is connected in series to the phase-C live wire 23d. When the contactor K2 is connected in series to the neutral wire 24, as shown in FIG. 11B, the contactor K2 includes a main contact 28b, and the main contact 28b is connected in series to the neutral wire 24. When the contactor K2 is connected in series to the live wires and the neutral wire 24, as shown in FIG. 11C, the contactor K2 includes a main contact 27b, a main contact 27c, a main contact 27d, and a main contact 28b. The main contact 27b is connected in series to the phase-A live wire 23b, the main contact 27c is connected in series to the phase-B live wire 23c, the main contact 27d is connected in series to the phase-C live wire 23d, and the main contact 28b is connected in series to the neutral wire 24. When the controller 20 controls the contactor K2 in a linkage control manner, the main contact 27b, the main contact 27c, the main contact 27d, and the main contact 28b are simultaneously turned on or simultaneously turned off. When the controller 20 controls the contactor K2 in a time-based control manner, the main contact 28b is turned on or turned off after the main contact 27b to the main contact 27d are turned on or turned off, that is, the main contact 28b and the main contact 27b to the main contact 27d are turned on or turned off at different time. It should be understood that when all the main contacts inside the contactor K2 are turned on or turned off, it indicates that the contactor K2 is turned on or turned off.

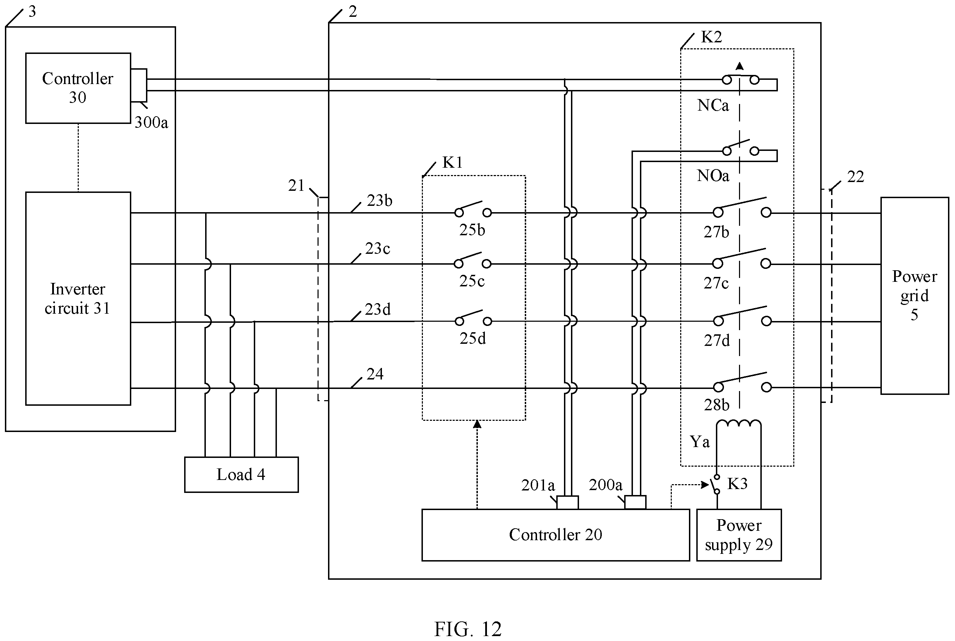

In some feasible implementations, any relay K1 shown in FIG. 10A to FIG. 10C may be combined with any contactor K2 shown in FIG. 11A to FIG. 11C. A combination manner of the relay K1 and the contactor K2 is not limited in this embodiment of this application. For example, when the relay K1 shown in FIG. 10A is combined with the contactor K2 shown in FIG. 11C, a structure of the on/off-grid switching apparatus 2 may be shown in FIG. 12. The contactor K2 further includes an auxiliary normally open contact NOa and an auxiliary normally closed contact NCa. An on/off status of the auxiliary normally open contact NOa is the same as on/off statuses of the main contacts, and a on/off status of the auxiliary normally closed contact NCa is opposite to the on/off statuses of the main contacts. In other words, when the main contact 27b, the main contact 27c, the main contact 27d, and the main contact 28b are turned on, the auxiliary normally open contact NOa is turned on and the auxiliary normally closed contact NCa is turned off. When the main contact 27b, the main contact 27c, the main contact 27d, and the main contact 28b are turned off, the auxiliary normally open contact NOa is turned off and the auxiliary normally closed contact NCa is turned on.

It may be understood that for specific operations and beneficial effect of controlling the relay K1 and the contactor K2 by the controller 20 when the power converter 3 is the three-phase power converter, refer to the descriptions of specific operations and beneficial effect of controlling the relay K1 and the contactor K2 by the controller 20 when the power converter 3 is the single-phase power converter in embodiments corresponding to FIG. 2 to FIG. 8A and FIG. 8B. Details are not described herein again.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An on/off-grid switching apparatus, wherein the on/off-grid switching apparatus comprises two ends, a live wire, a neutral wire, a relay, a contactor, and a controller, one end of the two ends is configured to connect to a power converter and a load, the other end of the two ends is configured to connect to a power grid, the relay is connected in series to at least one of the live wire and the neutral wire, and the contactor is connected in series to at least one of the live wire and the neutral wire;
the on/off-grid switching apparatus is configured to output, to the power grid through the live wire and the neutral wire, an alternating current output by the power converter, and the alternating current is obtained by inverting, by the power converter, a direct current output by a photovoltaic string or an energy storage battery; and
when a voltage of the power grid is less than or equal to a first voltage threshold, the controller is configured to: first control the relay to be turned off, and control the contactor to be turned off after the relay is turned off.

2. The on/off-grid switching apparatus according to claim 1, wherein the relay is connected in series to the live wire, the contactor comprises two main contacts, one of the two main contacts is connected in series to the live wire, and the other of the two main contacts is connected in series to the neutral wire; and
when the voltage of the power grid is less than or equal to the first voltage threshold, the controller is configured to: first control the relay to be turned off, and control the two main contacts to be simultaneously turned off after the relay is turned off.

3. The on/off-grid switching apparatus according to claim 1, wherein the relay is connected in series to the live wire, the contactor comprises two main contacts, one of the two main contacts is connected in series to the live wire, and the other of the two main contacts is connected in series to the neutral wire; and
when the voltage of the power grid is less than or equal to the first voltage threshold, the controller is configured to: first control the relay to be turned off, and control one main contact to be turned off prior to the other main contact after the relay is turned off.

4. The on/off-grid switching apparatus according to claim 2 or 3, wherein the contactor further comprises an auxiliary normally open contact, and an on/off status of the auxiliary normally open contact is the same as on/off statuses of the main contacts; and
after the controller controls the two main contacts to be turned off, if the auxiliary normally open contact is turned on, the controller is further configured to send a shutdown signal to the power converter, so that the power converter is shut down.

5. The on/off-grid switching apparatus according to claim 2 or 3, wherein the contactor further comprises an auxiliary normally closed contact, and an on/off status of the auxiliary normally closed contact is opposite to on/off statuses of the main contacts; and
after the controller controls the two main contacts to be turned off, if the auxiliary normally closed contact is turned off, the controller is further configured to send a shutdown signal to the power converter, so that the power converter is shut down.

6. A power supply system, wherein the power supply system comprises the on/off-grid switching apparatus according to claims 1 to 5 and a power converter, the power converter is connected to a power grid via the on/off-grid switching apparatus, and the power converter is configured to convert a direct current output by a photovoltaic string or an energy storage battery into an alternating current;
a contactor comprises a main contact and an auxiliary normally closed contact, wherein a on/off status of the auxiliary normally closed contact is opposite to an on/off status of the main contact;
when an inverter circuit in the power converter does not output an alternating current and a voltage of the power grid is less than a second voltage threshold,
if the auxiliary normally closed contact is turned on, a controller in the power converter is configured to control the inverter circuit to output an alternating current; or
if the auxiliary normally closed contact is turned off, a controller in the power converter is configured to control the inverter circuit not to output an alternating current; and
the second voltage threshold is less than a first voltage threshold.

7. An on/off-grid switching apparatus, wherein the on/off-grid switching apparatus comprises two ends, a live wire, a neutral wire, a relay, a contactor, and a controller, one end of the two ends is configured to connect to a power converter and a load, the other end of the two ends is configured to connect to a power grid, the relay is connected in series to at least one of the live wire and the neutral wire, and the contactor is connected in series to at least one of the live wire and the neutral wire;
the on/off-grid switching apparatus is configured to output, to the power grid through the live wire and the neutral wire, an alternating current output by the power converter, and the alternating current is obtained by inverting, by the power converter, a direct current output by a photovoltaic string or an energy storage battery; and
when a voltage of the power grid is greater than a first voltage threshold, the controller is configured to: first control the relay to be turned on, and control the contactor to be turned on after the relay is turned on.

8. The on/off-grid switching apparatus according to claim 7, wherein the relay is connected in series to the live wire, the contactor comprises two main contacts, one of the two main contacts is connected in series to the live wire, and the other of the two main contacts is connected in series to the neutral wire; and
when the voltage of the power grid is greater than the first voltage threshold, the controller is configured to: first control the relay to be turned on, and control the two main contacts to be simultaneously turned on after the relay is turned on.

9. The on/off-grid switching apparatus according to claim 7, wherein the relay is connected in series to the live wire, the contactor comprises two main contacts, one of the two main contacts is connected in series to the live wire, and the other of the two main contacts is connected in series to the neutral wire; and
when the voltage of the power grid is greater than the first voltage threshold, the controller is configured to: first control the relay to be turned on, and control one main contact to be turned on prior to the other main contact after the relay is turned on.
